# EUROPEAN PATENT SPECIFICATION

(11) **EP 1 584 496 B1**
(45) Date of publication and mention of the grant of the patent: **08.11.2006**
(21) Application number: 05101144.3
(22) Date of filing: 16.02.2005
(51) Int. Cl.: B60C 25/138

(54) **Machine for fitting and removing tires of vehicle wheels**
Vorrichtung zum Montieren und Demontieren von Rädern
Machine de montage et démontage de pneumatiques sur roues

(30) Priority: 27.02.2004 IT MO20040044
(43) Date of publication of application: 12.10.2005
(73) Proprietor: SICAM S.r.l., 42015 Correggio (Reggio Emilia) (IT)
(72) Inventor: Matteucci, Marco, 42010 Rio Saliceto (RE) (IT)
(74) Representative: Feltrinelli, Secondo Andrea

(56) References cited:
- EP-A- 0 042 363
- EP-A- 1 040 941
- US-A- 5 649 582

## Description

The present invention relates to a machine for fitting and removing tires of wheels, particularly heavy and large wheels.

Machines have long been known which are used to fit and remove tires on and from vehicle wheel rims and are conventionally known as tire changing machines.

These machines are constituted substantially by a supporting frame for means for gripping and turning a wheel rim being worked on about an axis and for a working assembly provided with one or more tools for fitting and removing the tire on and from the wheel rim.

These tools are commonly of two types: bead breaking tools and hook-like tools.

Bead breaking tools are suitable to be inserted between the beads of the tire and the corresponding annular folds of the wheel rim, so as to separate them and facilitate the subsequent insertion of a hook-like tool, which is generally curved and can move toward and away from the tire along the rotation axis of the wheel rim in order to push said beads inside or outside said annular folds.

There are many types of tire changing machine, with different shapes and dimensions depending on the size of the wheel rims and of the tires to be fitted/removed.

Tire changing machines intended for fitting and removing the tires of heavy and large wheels generally have an elongated rigid structure that supports the grip and rotation means at one end and is associated at the other end with the frame so as to be able to rotate about an oscillation axis that is substantially parallel to the rim rotation axis.

By way of conventional actuation means, the structure can be turned alternately about the oscillation axis so as to move the grip and rotation means along a circular path, for example in order to change their distance from the ground, facilitate the coupling/separation of the wheel rim with respect to the grip means, and position the tire in the correct working position with respect to the tools.

Moreover, the tools of tire changing machines for very heavy and large wheels are generally fitted on a movable arm, which can slide with respect to the frame on a slider that is engaged along a guide that is parallel to the wheel rim rotation axis.

The sliding of the slider with respect to the guide is such as to move the tools toward/away from the wheel both at the outer sidewall and at the inner sidewall of the tire, where the expression "outer sidewall" is used to reference the sidewall that remains visible when the wheel rim is fitted on the vehicle and the expression "inner sidewall" is used to reference the opposite sidewall.

The arm is commonly connected to the slider so that it can rotate about an axis that is parallel to the rotation axis of the wheel rim, but it can be fixed to it in a preset position in which the axis of said arm is arranged along a working direction that is perpendicular to the direction defined by the rotation and oscillation axes and intersects the circular path traced by the grip and rotation means.

The rotation of the structure about the oscillation axis is such, therefore, as to move the rim rotation axis toward the arm in order to allow the tools to be placed in contact with the beads of the tire.

A machine according to the preamble of claim 1 is disclosed in EP 0 042 363.

These known machines are susceptible of further improvements aimed in particular at increasing their flexibility and efficiency in use.

During fitting and removal operations, the wheel rotation axis and the working direction along which the arm is arranged are often in fact inclined with respect to each other.

This causes imperfect operation of the tools, which are designed to work in a configuration in which the direction of the arm intersects the rotation axis; accordingly, work performed on the beads of the wheel by said tools may be imperfect and/or defective and may subject the tire and the machine to excessive workloads.

In particular, it is noted that known tire changing machines have massive mechanical elements, such as the structure that supports the wheel and the tool supporting arm, which work in a cantilevered condition and therefore can be subjected to substantial flexural loads.

The structure that rotates about the oscillation axis, further, has a mobility that is extensive but not always sufficient to arrange the grip means close to the ground in order to allow to grip wheel rims placed on the ground; accordingly, operators often have to resort to awkward operations for lifting/lowering the wheel by way of external lifting means.

The aim of the present invention is to provide a machine for fitting and removing tires of vehicle wheels that allows to achieve these improvements, allowing to perform fitting and removal operations in optimum working conditions both for the tire and for the machine, in addition to simplifying considerably the interventions of the operator.

Within this aim, an object of the present invention is to provide a tire changing machine that is particularly compact, has limited dimensions and an optimized geometry, which allows to reduce the flexural loads of its components.

Another object of the present invention is to allow to grip the rims of wheels that rest on the ground and to perform subsequent removal without requiring external lifting means.

Another object of the present invention is to provide a structure that is simple, relatively easy to provide in practice, safe in use, effective in operation, and has a relatively low cost.

This aim and these and other objects that will become better apparent hereinafter are achieved by the present machine for fitting and removing tires of vehicle wheels, comprising at least one frame for supporting at least one movable structure and supporting grip and rotation means for gripping and rotating a vehicle wheel rim about a rotation axis, and at least one arm that supports at least one tool for fitting and/or removing a tire on and/or from said rim and can be arranged along a working direction that is substantially perpendicular to said rotation axis, wherein said structure comprises at least one first portion, which is movably associated with said frame, and characterized in that said structure further comprises at least one second portion, which is movably associated with said first portion and supports said grip and rotation means, said first and second portions being suitable to cooperate with each other in order to position said grip and rotation means in a working configuration, in which said rotation axis and said working direction are incident and the circumferential portion of said wheel rim is arranged proximate to said at least one tool.

Further characteristics and advantages of the present invention will become better apparent from the following detailed description of a preferred but not exclusive embodiment of a machine for fitting and removing tires of vehicle wheels, illustrated by way of non-limiting example in the accompanying drawings, wherein:
Figure 1 is a schematic side view, partially in phantom lines, of a first embodiment of the machine according to the invention;
Figure 2 is a schematic side view, partially in phantom lines, of a second embodiment of the machine according to the invention.

With reference to the figures, the reference numeral 1 generally designates a machine for fitting and removing tires of vehicle wheels.

The machine 1 comprises a frame 2, which supports a structure 3 that can rotate alternately about a substantially horizontal oscillation axis O.

Grip and rotation means 4 for gripping and turning a vehicle wheel rim about a rotation axis R that is substantially parallel to the oscillation axis O are associated with said structure; the vehicle wheel is not shown in the figures, since it is of a known type.

Moreover, an arm 5 is associated with the frame 2 and supports, at one of its ends 5a, two tools 6, which are used to fit and/or remove a tire on and/or from the rim of the wheel.

Said tools are constituted by a bead breaking tool 6a, such as a conventional disk that can rotate about its own axis, and a hook-like tool 6b of the conventional type.

The arm 5 can move with respect to the frame 2 and in fact its end 5b that lies opposite the previous end 5a is connected to a slider 7 so that it can rotate about a direction that is parallel to the oscillation axis O.

In turn, the slider 7 is engaged in a guide 8 with which the frame 2 is provided; said guide runs along a direction that is parallel to the oscillation axis O.

The arm 5 is of the telescopic type, since it is constituted by two tubular elements 9, one of which can be inserted slidingly in the other.

It is noted that the coupling of the arm 5 to the frame 2 is such as to allow its movement while keeping its axis substantially perpendicular to the directions traced by the oscillation axis O and rotation axis R.

The mobility of the arm 5 can be reduced temporarily by way of removable locking means, which are not shown in the figures as they are of a conventional type, so as to allow its placement along a preset working direction L.

According to the invention, the structure 3 is constituted by a first portion 10a, which is pivoted to the frame 2 so that it can rotate about the oscillation axis O, and by a second portion 10b, which can move with respect to the first portion and supports the supporting means 4.

The first and second portions 10a and 10b are suitable to cooperate with each other in order to position the means 4 in a working configuration, in which the rotation axis R and the working direction L are mutually incident and the circumferential portion of the rim is arranged in the vicinity of the tools 6.

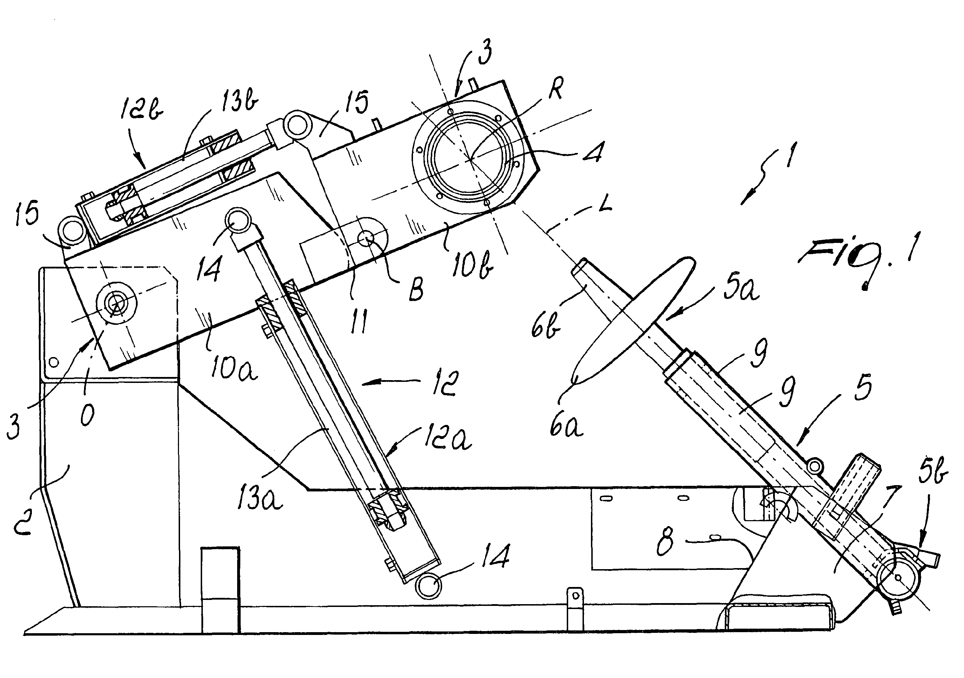

In a first embodiment of the present invention, shown in Figure 1, the second portion 10b is associated with the first portion 10a so that it can rotate about a tilting axis B that is substantially parallel to the rotation axis R; the free end of the first portion 10a, in particular, is provided with a fork-like body 11, which protrudes longitudinally and at which the second portion 10b is pivoted.

In order to move the structure 3 with respect to the frame 2, the machine 1 is provided with actuation means 12 of the linear type as described hereinafter.

In particular, first actuation means 12a for actuating the rotation of the first portion 10a about the oscillation axis O are provided; they are advantageously of the type of a first jack 13a with ends that are rotatably associated respectively with the frame 2 and with the first portion 10a at two points 14 that are separate from the oscillation axis O.

Further, the machine 1 is provided with second actuation means 12b for actuating the rotation of the second portion 10b about the tilting axis B, which conveniently comprise a second jack 13b with ends that are respectively associated so that they can rotate with two brackets 15 that protrude upward from the first portion 10a and from the second portion 10b.

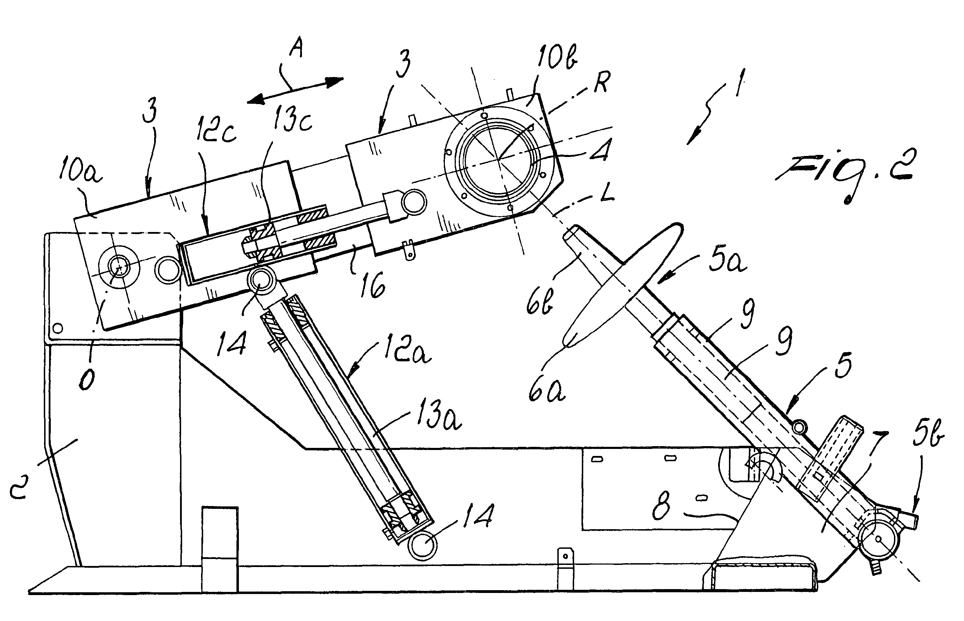

In a second embodiment of the present invention, shown in Figure 2, the first portion 10a and the second portion 10b are mutually connected so that they can slide along a direction that is substantially perpendicular to the rotation axis R and is illustrated by means of the arrow A in Figure 2.

In this embodiment, the first portion 10a and the second portion 10b are constituted, respectively, by a first body tubular body and a second tubular body, which have an elongated shape, are aligned along the direction A, and are mutually coaxial.

In particular, the second body 10b has a portion 16 that is inserted so that it can slide along the direction A within the first body 10a, which acts as a guide.

The machine 1 shown in Figure 2, as well as the machine related to Figure 1, is provided with actuation means 12 that are of the linear type, which can be actuated on command.

For the movement of the first portion 10a with respect to the frame 2, reference is made to what has been specified above with regard to the first actuation means 12a.

For the movement of the second portion 10b with respect to the first portion 10a, there are instead third actuation means 12c for actuating the sliding of one portion with respect to the other along the direction A.

Advantageously, said third actuation means are constituted by a third jack 13c, which is aligned with the direction A and in which the ends are associated with the respective portions 10a and 10b.

In the two embodiments of the machine 1 shown in Figures 1 and 2, the actuation means 12 (12a, 12b, 12c) are shown as being of the fluid-operated (hydraulic or pneumatic) linear type, but alternative embodiments can be used also, in which they are rotary, and/or they are electrically-operated or are actuation means of other suitable type.

The operation of the present invention is as follows: initially, the wheel rim must be fitted on the means 4 in a manner similar to that of conventional machines.

Both during fitting and during removal of the tire on and from the wheel rim, the first and second portions 10a and 10b may be moved by acting independently on the respective actuation means 12 until the working configuration is reached.

Finally, by way of the sliding of the slider 7 along the guide 8 it is possible to arrange the tools 6 in contact with the bead of the tire, keeping the rotation axis R and the working direction L incident to each other.

In practice it has been found that the described invention achieves the proposed aim and objects, and in particular the fact is stressed that it allows to improve operation and increase efficiency and flexibility of use with respects to conventional machines.

The particular refinement of using two portions that can move with respect to each other in fact provides the structure for supporting the grip and rotation means with two degrees of freedom instead of one as in known tire changing machines; this allows to position said means in a working configuration in which the rotation axis and the working direction are mutually incident, allowing to use the tools in an optimum manner and to distribute in a less stressful manner the workloads generated during fitting/removal on the tire and on the machine.

Besides, it is noted that in conventional machines such a working configuration can be obtained only for particular dimensions of the wheel rims fitted on the grip and rotation means, whereas in the present invention the rotation axis and the working direction may be arranged easily so that they are incident regardless of the extension of the wheel rim.

The two degrees of freedom given to the structure that supports the wheel, further, allow to obtain a tire changing machine that is capable of working in more compact configurations than conventional machines and in which the flexural loads of the cantilevered mechanical elements are particularly modest.

Finally, it is noted that the wheel supporting structure has a mobility that allows to position the grip means proximate to wheel rims that are resting on the ground, in order to allow to grip them without resorting to external lifting means; likewise, the same advantage can be observed during removal of the wheel from the grip means.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for fitting and removing tires of vehicle wheels, comprising at least one frame (2) for supporting at least one movable structure (3) and supporting grip and rotation means (4) for gripping and rotating a vehicle wheel rim about a rotation axis (R), and at least one arm (5) that supports at least one tool (6) for fitting and/or removing a tire on and/or from said rim and can be arranged along a working direction (L) that is substantially perpendicular to said rotation axis (R) wherein said structure (3) comprises at least one first portion (10a), which is movably associated with said frame (2), and **characterized in that** said structure further comprises at least one second portion (10b), which is movably associated with said first portion (10a) and supports said grip and rotation means (4), said first and second portions (10a, 10b) being adapted to cooperate with each other in order to position said grip and rotation means (4) in a working configuration, in which said rotation axis (R) and said working direction (L) are incident and the circumferential portion of said wheel rim is arranged proximate to said at least one tool (6).

2. The machine according to claim 1, **characterized in that** said first portion (10a) is associated with said frame (2) so that it can rotate about an oscillation axis (O) that is substantially parallel to said rotation axis (R).

3. The machine according to one or more of the preceding claims, **characterized in that** said second portion (10b) is associated with said first portion (10a) so that it can rotate about a tilting axis (B) that is substantially parallel to said rotation axis (R).

4. The machine according to one or more of the preceding claims, **characterized in that** said second portion (10b) is associated with said first portion (10a) so that it can slide along a direction (A) that is substantially perpendicular to said rotation axis (R).

5. The machine according to one or more of the preceding claims, **characterized in that** said first and second portions respectively comprise at least one first body (10a) and one second body (10b) having a substantially elongated shape, at least one of said bodies being substantially tubular, the second body (10b) being associated so that it can slide along the first body (10a).

6. The machine according to one or more of the preceding claims, **characterized in that** it comprises first means (12a) for actuating the rotation of said first portion (10a) about said oscillation axis (O).

7. The machine according to one or more of the preceding claims, **characterized in that** it comprises second means (12b) for actuating the rotation of said second portion (10b) about said tilting axis (B).

8. The machine according to one or more of the preceding claims, **characterized in that** it comprises third means (12c) for actuating the sliding of said second portion (10b) with respect to said first portion (10a).

9. The machine according to one or more of the claims 6-8, **characterized in that** at least one of said actuation means (12a,12b,12c) is of the linear type.

10. The machine according to one or more of the claims 6-9, **characterized in that** at least one of said actuation means (12a,12b,12c) can be actuated on command.

11. The machine according to one or more of the claims 6-10, **characterized in that** at least one of said actuation means (12a,12b,12c) is of the electrically-operated type.

12. The machine according to one or more of the claims 6-11, **characterized in that** at least one of said actuation means (12a,12b,12c) is of the fluid-operated type.

13. The machine according to one or more of the claims 6-12, **characterized in that** said first actuation means (12a) comprise at least one first jack (13a), the ends of which are associated so that they can rotate respectively with said frame (2) and with said first portion (10a).

14. The machine according to one or more of the claims 6-13, **characterized in that** said second actuation means (12b) comprise at least one second jack (13b), the ends of which are associated so that they can rotate respectively with said first portion (10a) and with said second portion (10b).

15. The machine according to one or more of the claims 6-14, **characterized in that** said third actuation means (12c) comprise at least one third jack (13c), the ends of which are associated respectively with said first portion (10a) and with said second portion (10b).

## Patentansprüche

1. Maschine zum Montieren und Demontieren der Reifen von Fahrzeugrädern mit mindestens einem Rahmen (2) zur Abstützung mindestens eines bewegbaren Aufbaus (3) und Mittel zum Erfassen und Rotieren (4) abstützend zum Erfassen der Felge eines Fahrzeugrads und dem Rotieren derselben um eine Rotationsachse (R) und mit mindestens einem Arm (5), der mindestens ein Werkzeug (6) zum Montieren und/oder Demontieren eines Reifens auf die und/oder von der Felge trägt und der längs zu einer Arbeitsrichtung (L) angeordnet werden kann, die im Wesentlichen senkrecht zur Rotationsachse (R) verläuft, wobei der Aufbau (3) mindestens einen ersten Abschnitt (10a) umfasst, der mit dem Rahmen (2) bewegbar verbunden ist und **dadurch gekennzeichnet, dass** der Aufbau weiterhin mindestens einen zweiten Abschnitt (10b) umfasst, der mit dem ersten Abschnitt (10a) bewegbar verbunden ist und der die Mittel zum Erfassen und Rotieren (4) trägt, wobei der erste Abschnitt (10a) und der zweite Abschnitt (10b) geeignet sind, zusammenzuwirken, um die Mittel zum Erfassen und Rotieren (4) in eine Betriebskonfiguration zu positionieren, in der die Rotationsachse (R) und die Arbeitsrichtung (L) sich schneiden und der Umfangsbereich der Radfelge in der Nähe des mindestens einen Werkzeugs (6) angeordnet ist.

2. Maschine nach Anspruch 1, **dadurch gekennzeichnet, dass** der erste Abschnitt (10a) so mit dem Rahmen (2) verbunden ist, dass er um eine Schwenkachse (O) verschwenkbar ist, die im Wesentlichen parallel zu der Rotationsachse (R) angeordnet ist.

3. Maschine nach einem oder mehreren der vorhergehenden Ansprüche, **dadurch gekennzeichnet, dass** der zweite Abschnitt (10b) so mit dem ersten Abschnitt (10a) verbunden ist, dass er um eine Kippachse (B) verschwenkbar ist, die im Wesentlichen parallel zu der Rotationsachse (R) angeordnet ist.

4. Maschine nach einem oder mehreren der vorhergehenden Ansprüche, **dadurch gekennzeichnet, dass** der zweite Abschnitt (10b) so mit dem ersten Abschnitt (10a) verbunden ist, dass er entlang einer Richtung (A) verschiebbar ist, die im Wesentlichen senkrecht zu der Rotationsachse (R) angeordnet ist.

5. Maschine nach einem oder mehreren der vorhergehenden Ansprüche, **dadurch gekennzeichnet, dass** der erste und der zweite Abschnitt jeweils aus mindestens einem ersten Körper (10a) und einem zweiten Körper (10b) mit einer im Wesentlichen länglichen Form bestehen, wobei mindestens einer der Körper im Wesentlichen rohrförmig ist und der zweite Körper (10b) so angeordnet ist, dass er entlang des ersten Körpers (10a) verschiebbar ist.

6. Maschine nach einem oder mehreren der vorhergehenden Ansprüche, **dadurch gekennzeichnet, dass** sie erste Mittel (12a) zum Betätigen der Rotation des ersten Abschnitts (10a) um die Schwenkachse (O) umfasst.

7. Maschine nach einem oder mehreren der vorhergehenden Ansprüche, **dadurch gekennzeichnet, dass** sie zweite Mittel (12b) zum Betätigen der Rotation des zweiten Abschnitts (10b) um die Kippachse (B) umfasst.

8. Maschine nach einem oder mehreren der vorhergehenden Ansprüche, **dadurch gekennzeichnet, dass** sie dritte Mittel (12c) zum Betätigen des Verschiebens des zweiten Abschnitts (10b) gegenüber dem ersten Abschnitt (10a) umfasst.

9. Maschine nach einem oder mehreren der Ansprüche 6-8, **dadurch gekennzeichnet, dass** mindestens eines der Betätigungsmittel (12a,12b,12c) linear betrieben wird.

10. Maschine nach einem oder mehreren der Ansprüche 6-9, **dadurch gekennzeichnet, dass** mindestens eines der Betätigungsmittel (12a,12b,12c) ansteuerbar ist.

11. Maschine nach einem oder mehreren der Ansprüche 6-10, **dadurch gekennzeichnet, dass** mindestens eines der Betätigungsmittel (12a,12b,12c) elektrisch betriebenen wird.

12. Maschine nach einem oder mehreren der Ansprüche 6-11, **dadurch gekennzeichnet, dass** mindestens eines der Betätigungsmittel (12a,12b,12c) mit einem Fluid betrieben wird.

13. Maschine nach einem oder mehreren der Ansprüche 6-12, **dadurch gekennzeichnet, dass** die ersten Betätigungsmittel (12a) mindestens ein erstes Hebezeug (13a) aufweisen, dessen Enden so angeordnet sind, dass sie jeweils mit dem Rahmen (2) und mit dem ersten Abschnitt (10a) verschwenkbar sind.

14. Maschine nach einem oder mehreren der Ansprüche 6-13, **dadurch gekennzeichnet, dass** die zweiten Betätigungsmittel (12b) mindestens ein zweites Hebezeug (13b) aufweisen, dessen Enden so angeordnet sind, dass sie jeweils mit dem ersten Abschnitt (10a) und mit dem zweiten Abschnitt (10b) verschwenkbar sind.

15. Maschine nach einem oder mehreren der Ansprüche 6-14, **dadurch gekennzeichnet, dass** die dritten Betätigungsmittel (12c) mindestens ein drittes Hebezeug (13c) aufweisen, dessen Enden jeweils mit dem ersten Abschnitt (10a) und mit dem zweiten Abschnitt (10b) verbunden sind.

## Revendications

1. Machine de montage et démontage de pneumatiques pour des roues de véhicules, comprenant au moins un bâti (2) destiné à supporter au moins une structure mobile (3) et des moyens de support, préhension et rotation (4) destinés à serrer et faire tourner une jante d'une roue d'un véhicule autour d'un axe (R) de rotation, et au moins un bras (5) qui supporte au moins un outil (6) pour monter et/ou démonter un pneu sur et/ou de ladite jante et peut être agencé le long d'une direction (L) de travail qui est sensiblement perpendiculaire audit axe de rotation (R), dans laquelle ladite structure (3) comprend au moins une première partie (10a) qui est associée de manière mobile audit bâti (2), et ***caractérisée en ce que*** ladite structure comprend de plus au moins une deuxième partie (10b) qui est associée de manière mobile à ladite première partie (10a) et supporte lesdits moyens (4) de préhension et de rotation, lesdites première et deuxième parties (10a, 10b) étant adaptées pour coopérer l'une avec l'autre de manière à positionner lesdits moyens (4) de préhension et de rotation dans une configuration de travail, dans laquelle ledit axe de rotation (R) et ladite direction de travail (L) sont incidentes et la portion circonférentielle de ladite jante est agencée à proximité dudit au moins un outil (6).

2. Machine selon la revendication 1, ***caractérisée en ce que*** ladite première partie (10a) est associée audit bâti (2) de façon qu'elle puisse tourner autour d'un axe d'oscillation (O) qui est sensiblement parallèle audit axe de rotation (R).

3. Machine selon l'une ou plusieurs des revendications précédentes, ***caractérisée en ce que*** ladite deuxième partie (10b) est associée à ladite première partie (10a) de façon qu'elle puisse tourner autour d'un axe de basculement (B) qui est sensiblement parallèle audit axe de rotation (R).

4. Machine selon l'une ou plusieurs des revendications précédentes, ***caractérisée en ce que*** ladite deuxième partie (10b) est associée à ladite première partie (10a) de façon qu'elle puisse coulisser dans une direction (A) qui est sensiblement perpendiculaire audit axe de rotation (R).

5. Machine selon l'une ou plusieurs des revendications précédentes, ***caractérisée en ce que*** lesdites première et deuxième parties comprennent respectivement au moins un premier corps (10a) et un deuxième corps (10b) de forme sensiblement oblongue, au moins l'un desdits corps étant sensiblement tubulaire, le deuxième corps (10b) étant associé de façon qu'il puisse coulisser le long du premier corps (10a).

6. Machine selon l'une ou plusieurs des revendications précédentes, ***caractérisée en ce qu*'**elle comprend des premiers moyens (12a) de déclenchement de la rotation de ladite première partie (10a) autour dudit axe d'oscillation (O).

7. Machine selon l'une ou plusieurs des revendications précédentes, ***caractérisée en ce* qu'**elle comprend des deuxièmes moyens (12b) de déclenchement de la rotation de ladite deuxième partie (10b) autour dudit axe de basculement (B).

8. Machine selon l'une ou plusieurs des revendications précédentes, ***caractérisée en ce qu*'**elle comprend des troisièmes moyens (12c) de déclenchement du coulissement de ladite deuxième partie (10b) par rapport à ladite première partie (10a).

9. Machine selon l'une ou plusieurs des revendications 6 à 8, ***caractérisée en ce* qu'**au moins l'un desdits moyens de déclenchement (12a, 12b, 12c) est de type linéaire.

10. Machine selon l'une ou plusieurs des revendications 6 à 9, ***caractérisée en ce qu'**au* moins l'un desdits moyens de déclenchement (12a, 12b, 12c) peut être déclenché sur commande.

11. Machine selon l'une ou plusieurs des revendications 6 à 10, ***caractérisée en ce qu*'**au moins l'un desdits moyens de déclenchement (12a, 12b, 12c) est du type actionné électriquement.

12. Machine selon l'une ou plusieurs des revendications 6 à 11, ***caractérisée en ce qu*'**au moins l'un desdits moyens de déclenchement (12a, 12b, 12c) est du type actionné par un fluide.

13. Machine selon l'une ou plusieurs des revendications 6 à 12, ***caractérisée en ce que*** lesdits premiers moyens de déclenchement (12a) comprennent au moins un premier vérin (13a) dont les extrémités sont associées de façon à ce qu'elles puissent tourner respectivement avec ledit bâti (2) et avec ladite première partie (10a).

14. Machine selon l'une ou plusieurs des revendications 6 à 13, ***caractérisée en ce que*** lesdits deuxièmes moyens de déclenchement (12b) comprennent au moins un deuxième vérin (13b) dont les extrémités sont associées de façon à ce qu'elles puissent tourner respectivement avec ladite première partie (10a) et avec ladite deuxième partie (10b).

15. Machine selon l'une ou plusieurs des revendications 6 à 14, ***caractérisée en ce que*** lesdits troisièmes moyens de déclenchement (12c) comprennent au moins un troisième vérin (13c) dont les extrémités sont associées respectivement ladite première partie (10a) et à ladite deuxième partie (10b).
